(19) **Europäisches Patentamt**
**European Patent Office**
**Office européen des brevets**

(11) **EP 3 319 172 B1**

(12) **EUROPEAN PATENT SPECIFICATION**

(45) Date of publication and mention
of the grant of the patent:
**21.10.2020 Bulletin 2020/43**

(21) Application number: **17200470.7**

(22) Date of filing: **07.11.2017**

(51) Int Cl.:
*H01Q 1/28* *(2006.01)*     *G01S 7/03* *(2006.01)*
*G01S 13/87* *(2006.01)*     *H01Q 3/38* *(2006.01)*
*H01Q 21/00* *(2006.01)*     *H01Q 21/06* *(2006.01)*
*H01Q 21/28* *(2006.01)*     *H01Q 13/18* *(2006.01)*
*G01S 13/02* *(2006.01)*

(54) **AIRBORNE/SPACEBORNE DISTRIBUTED APERTURE MULTI SENSING PULSED RF SYSTEM**

LUFTGESTÜTZTES/RAUMGESTÜTZTES GEPULSTES HF-SYSTEM MIT VERTEILTER APERTUR FÜR MEHRFACHERFASSUNG

SYSTÈME RF PULSÉ À MULTI-DÉTECTION AÉROPORTÉ/SPATIAL À OUVERTURE DISTRIBUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2016 IT 201600111859**

(43) Date of publication of application:
**09.05.2018 Bulletin 2018/19**

(73) Proprietor: **LEONARDO S.p.A.**
**00195 Roma (IT)**

(72) Inventors:
• **APRILE, Angelo**
**00131 ROMA (IT)**

• **ISELLA, Giorgio**
**00131 ROMA (IT)**
• **MONTANARI, Alessandro**
**00131 ROMA (IT)**

(74) Representative: **Bergadano, Mirko et al**
**Studio Torta S.p.A.**
**Via Viotti, 9**
**10121 Torino (IT)**

(56) References cited:
**EP-A1- 2 857 858**     **FR-A1- 2 939 206**
**US-A- 3 858 206**     **US-A1- 2003 067 410**
**US-A1- 2008 074 338**     **US-A1- 2010 066 631**

## Description

## Technical Field of the Invention

The present invention relates in general to airborne/spaceborne pulsed radars, and in particular to an airborne/spaceborne pulsed radar architecture based on an ensemble of wide band antennas and RF transmitters designed to be mountable to an aircraft skin surface in a conformal or quasi-conformal way in order to have low impact on aircraft shape and aerodynamics and to allow simultaneous multi RF pulsed sensing.

## State of the Art

As is known, Communication, Data Link and Electronic Warfare are mandatory aspects for modern airborne missions, especially for Remotely Piloted Air Systems (RPAS), which make use of different bands of the Electromagnetic (EM) spectrum, thus requiring additional hardware (HW) components which need to be mounted on the platform and used in simultaneity with radar. This has impact on the total weight of the mission payload and put issues on the total affordable Size, Weight and Power (SWaP) budget to allow simultaneous multi-RF sensing, as well as on the availability of platform surface for antennas deployment.

The Applicant has experienced that airborne Active Electronically Steerable Antenna (AESA) technology currently exploited in modern airborne surveillance and combat mission systems is adversely affected by several problematic issues, some of the main ones of which are:

- Cost / Affordability

AESA radars rely on a very expensive technology and give rise to very complex systems, since thousands of Transmit/Receive Modules (TRMs) need to be controlled one by one. The total system cost is mainly driven by the number of TRMs required to form the full antenna aperture. Moreover, the full exploitation of all its advantages requires highly qualified know-how and long development time

- Cooling / Weight / Power Consumption / Installation

High performance AESA systems require very often liquid cooling and are characterized by high power supply and high weight impacting significantly on installation feasibility (full performance AESA installation is feasible only on mid-high size aircraft)

- Electronic Warfare (EW) Detectability

High performance achievable by AESA technology increase radar probability of detection by ESM/EW systems

- International Traffic in Arms Regulations (ITAR) restrictions

AESA components are very often limited by ITAR restrictions

- Volume/Installation limits

High performance airborne AESA systems are bulky and far to be thin. This prevents ease of installation and conformal or quasi-conformal mounting on aircraft skin surface.

One of major causes of the above limits is that, in order to fully exploit available surface, traditional pulsed RF sensing systems, and particularly radars, are based on transmission and reception through the same antenna.

In general, even not considering AESA but also traditional RF pulsed sensor technology, in addition to the above issues, it is a widespread experience among those skilled in the art that today airborne systems adopt a dedicated equipment configuration for each type of RF sensor needed for the mission (namely, Radar, EW, Communications, Data-Link, IFF, etc.), with significant impact on the total system weight, power consumption and cost.

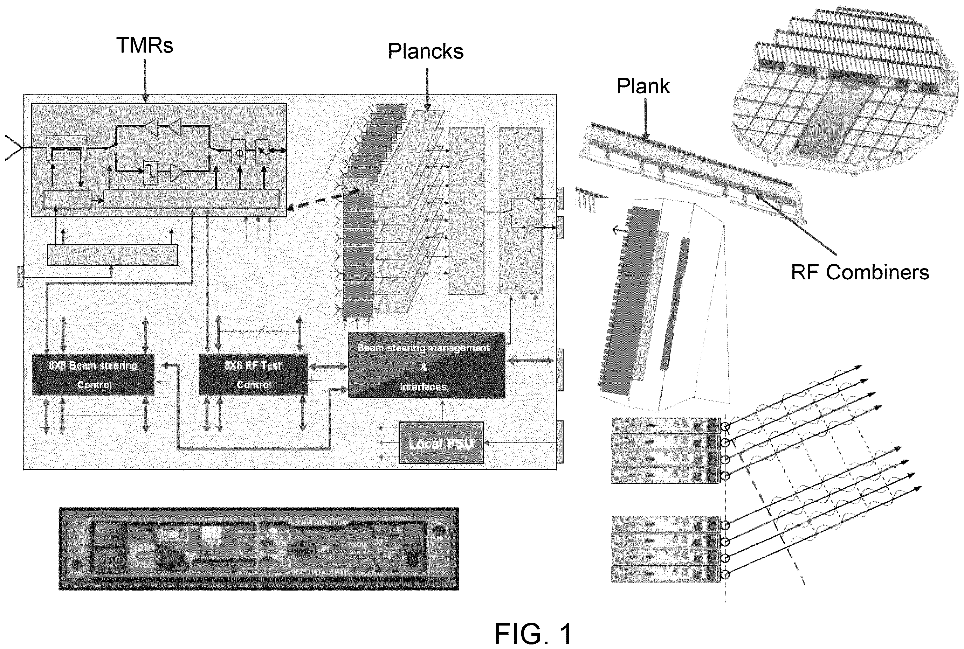

For illustrative purposes only, Figure 1 sketches a traditional AESA architecture, where TRMs are organized/combined in Planks, Planks are then combined in one or more RX channels, and the maximum antenna elements interspacing is little more than half (0.54) the operating wavelength for a maximum look angle of 60°.

EP 2 857 858 A1 discloses a digital active array radar comprising a Frequency-Modulated Continuous-Wave (FMCW) radar array including a housing, a transmit array comprising a plurality of transmit antenna elements configured to output an FMCW transmit beam, a receive array comprising a plurality of receive antenna elements, and a slotted choke disposed between the transmit array and the receive array. The transmit array and the receive array may be mechanically coupled to the housing. The slotted choke comprises a plurality of slots having dimensions selected to provide cancelation of electromagnetic radiation from the frequency modulated continuous wave transmit beam to reduce a magnitude of radiation from the transmit array to which the receive array is indirectly exposed.

## Subject and Summary of the Invention

The aim of the present invention is to face with the above-described main issues of the airborne AESA and present alternative RF pulsed sensors technology solutions.

The present invention relates to an Airborne/Spaceborne Distributed Aperture Multi Sensing RF Pulsed System, as claimed in the appended claims.

## Brief Description of the Drawings

Figure 1 schematically shows a traditional AESA architecture.

Figure 2 schematically shows an airborne Distributed Aperture Multi Sensing RF Pulsed System (DAMSS) according to the present invention and exemplarily made up of four DAMSS Modules arranged on an aircraft in the form of an unmanned combat aerial vehicle (UCAV).

Figure 3 schematically shows a functional block diagram of a DAMSS Module and an example of electrical connection of DAMSS Modules to a Central Control Electronic Processing Unit.

Figure 4 schematically shows a function block diagram of a DAMSS Radiating Group in a DAMSS Module.

Figure 5 schematically shows a functional block diagram of a DAMSS Multi-Channel Digital Receiver in a DAMSS Module.

Figure 6 schematically shows an antenna array manufactured according to a Printed Circuit Board (PCB) Active Array (PAA) technology.

Figure 7 schematically shows superposition of a Radiating plate PCB and an RF Combiner PCB in an antenna array according to the PAA technology.

Figures 8 and 9 show 3D rendered images of an antenna array, in an assembled configuration and in an exploded configuration, respectively.

Figure 10 comparatively shows the spatial arrangement and area occupation of a Transmit-only, Receive-only and Transmit-Receive Antenna Modules in the Radiating Group.

Figures 11 and 12 schematically show an example of a single stacked patch radiating/receiving antenna element, both in an assembled configuration and in an exploded configuration, respectively.

Figure 13 comparatively shows graphical representations of operation principles of a Radiating Group and of a traditional AESA or a standard technology TX/RX system.

Figure 14 schematically shows a graphical representation of a Multi Beam on Receive operation principle shown in Figure 13.

Figure 15 shows a graphical representation of operating and rejected frequency bands of the Radiating Group for simultaneous radar modes.

Figure 16 schematically show a sub-arraying technique.

Figure 17 schematically shows a block diagram of a circuit designed to apply phase shifts to digitized output signals from the antenna sub-arrays.

Figure 18 shows a diagram plotting phase shift discontinuity over sub-arrays.

Figure 19 shows the effect to phase shift discontinuity in the far field radiation pattern of five multiple narrow beams.

Figure 20 shows the effect of the provision of differently-sized and overlapping Sub-Arrays in the far field radiation pattern of five multiple narrow beams.

## Detailed Description of Embodiments of the Invention

The present invention will now be described in detail with reference to the attached figures to enable a skilled person to implement and use it. Various modifications to the described embodiments will be immediately apparent to the expert and the generic principles described may be applied to other embodiments and applications, without thereby exiting from the protective scope of the present invention, as defined in the appended claims. Therefore, the present invention should not be considered limited to the forms of embodiment described and illustrated, but should be granted with the widest scope compliant with the described and claimed principles and features.

In broad outline, the Distributed Aperture Multi Sensing RF Pulsed System (DAMSS) of the present invention is a pulsed radar system architecture concept based on an ensemble of wide band antennas and RF transmitters designed to be mountable to the aircraft skin surface in a conformal or quasi-conformal way in order to have low impact on aircraft shape and aerodynamic and to allow simultaneous multi RF sensing and operation.

The DAMSS may be generally seen as a common interface between external RF environment and platform digital busses shared by a wide set of avionic equipment such as Radar, Communications and Electronic Warfare.

The DAMSS architecture concept directly originates from the radar equation, which can be written as follows, by sequentially including constraints facing the above-listed topics:

$$\frac{S}{N} = \frac{P_{Avg} \cdot G_{Ant-TX} \cdot G_{Ant-RX} \cdot \lambda^2 \cdot T_{OT} \cdot RCS}{(4\pi)^3 \cdot k \cdot T_0 \cdot F \cdot L_{osses}} \cdot \frac{1}{R^4}$$

where:

S/N is the Signal to Noise power ratio at the receiver output;
$P_{Avg}$ is the average transmitted power;
$G_{Ant-TX}$ is the antenna gain in transmission;
$G_{Ant-RX}$ is the antenna gain on receive;
$\lambda$ is the wavelength of the transmitted waveform;
$T_{OT}$ is the Time on Target (target illumination interval);
RCS is the target Radar Cross Section;
$kT_0F$ is the Density of Noise Power;
L is the loss due to the Tx and Rx paths;
R is the sensor to target distance.

Radar system detectability is directly related to the transmitted energy, i.e. with the product $P_{Avg} \cdot G_{Ant-TX}$, which therefore should be reduced in order to reach a Low Probability of Intercept (LPI) condition. Moreover, cost of an AESA system is mainly driven by the high number of required TRMs.

In the DAMSS architecture, reduction of cost and detectability is achieved by separating Tx antenna from Rx antenna and considering small Tx antennas with a low number of costly transmitting modules and wide beam/low gain Tx antenna patterns.

To balance the consequent power reduction in transmission, a high value of $G_{Ant-RX}$ is to be achieved. This means the wider possible surface to be allocated for the Rx antenna. Some performance recovery can also be obtained by exploiting the longer observation time (Time o Target - ToT) enabled by the wide beam of the small Tx antenna (Multi Beam on Receive - MBR). In order to preserve E-scan capability, both Tx and Rx antennas must be fully populated by phase shifters (one for each antenna radiating/receiving element).

From this preliminary reasoning, the main DAMSS characteristics follow directly:

- separation between Tx and Rx functions, with
- low-directivity transmit beam resulting in a small size Tx antenna with a small number of Tx-only modules (no need for Tx/Rx switches or circulators reducing Tx losses and maximizing Tx efficiency),
- high-directivity receive beam resulting in a large size Rx Array with large number of Rx-only (passive) modules (no need for Tx/Rx switches or circulators reducing Rx losses and maximizing Rx noise figure), and
- Multi Beam on Receive (MBR) processing to exploit the ToT, resulting in a multi-channel Rx antenna.

This first architectural decision has the following potential advantages:

- the small size, fully populated Tx antenna results in an affordable, low cost and potentially air cooled AESA, and
- the large size, fully populated Rx array comprises a large number of passive modules contributing to the beneficial effects on heat dissipation, system complexity, weights and cost.

All other aspects of the DAMSS concept directly derive by forcing the remaining design constraints.

Unlike current AESA systems, where pseudo Multi-Functionality is achieved on a time sharing basis, in the DAMSS real Multi-Functionality is obtained by introducing a second independent Tx/Rx unit, which actually ensures the implementation of really simultaneous functionalities. To cope with weight and size limitations, a small Tx/Rx antenna is to be provided.

Independent Tx/Rx can be used for EW attack or auxiliary radar mode while main radar mode is achieved by active Tx and passive Rx. When the optional Tx/Rx antenna is not provided, Multi-Functionality is achieved on a time sharing base as in the current AESA systems.

Double independent Tx capability enables Multiple-Input, Multiple-Output (MIMO) processing.

Passive ESA Rx antenna is wide bandwidth (5.0 - 11 GHz) and it incorporates a Tx/Rx antenna to cover COMMS / Data-Link / ESM (Electronic Support Measures) operation in the low frequency spectrum (0.8 - 5 GHz).

To maintain flatness, all antenna elements in the DAMSS are of a Tile type and are conveniently manufactured according to the known Stacked Patch technology.

This is achieved by using Printed Circuit Boards (PCBs) both to implement Tx and/or Rx antenna radiating patterns and to mount all solid state electronic components.

The main functional tasks of the DAMSS are:

- X and C Band Radar Surveillance Modes,
- ECM and ESM functionalities in C and X Bands,
- Electronic Attack in C and X Bands,
- Point to Point Communication from L to X Band, and
- Data Link from L to X Band.

The DAMSS architecture is particularly suitable for RPAS applications, particularly Medium Altitude Long Endurance (MALE) and Unmanned Combat Aerial Vehicle (UCAV) platforms, because it:

- reduces size and weight of the required mission payload
- permits a quasi-conformal distribution of the antennas over the whole platform surface
- enables access to different RF services: Radar, EW, Communications, IFF and Data Link
- enables full passive radar operation, assuming that a stand-off MALE platform illuminates the area of interest, so highly reducing the risk of enemy detection
- facilitates sensors fusion and integration by relying on a centralized processor for final digital signal processing.

The DAMSS architecture is also suitably applicable to manned platforms, both rotary and fixed wing.

The DAMSS has several advantages over all the current AESA technology, namely:

- Cost reduction / Improved Affordability.
- Easier Cooling / lower Weight and Power Consumption / Easier Installation.
- Reduced EM Detectability
- Support to multi RF service requests (Radar, Communication, Data Link, IFF and Electronic Warfare).

In particular, the main advantages of the DAMSS architecture are:

- reduction in cooling requirements, power consumption, weight and cost due to:

    ✓ low number of costly transmit and receive components (TRMs) required,
    ✓ use of state of the art high performance packaged Commercial Off-the-Shelf (COTS) components, so avoiding the need for customized miniaturized devices, e.g.: packaged GaN based and highly efficient High Power Amplifiers (HPAs) or packaged very Low Noise Amplifiers (LNAs),
    ✓ use of a simple PCB for mounting of all required packaged components, and
    ✓ use of PCB-based low cost-high performance antenna panels.

- very high reliability (no moving antenna parts, only solid-state components and minority of active components) and easiness of installation due to the low thickness of the radiating part of each Tx/Rx group (few centimetres),
- ability to perform state of the art advanced processing techniques (Multi Beam on Receive (MBR), Adaptive Digital Beam Forming (ADBF), Multiple Input Multiple Output (MIMO), Multi-Functionality) due to multi-antenna/multi-channel architecture, and
- integration of radar with other RF sensors to achieve higher performance combined multi-sensor operation through centralized further reducing cost and SWaP at platform level.

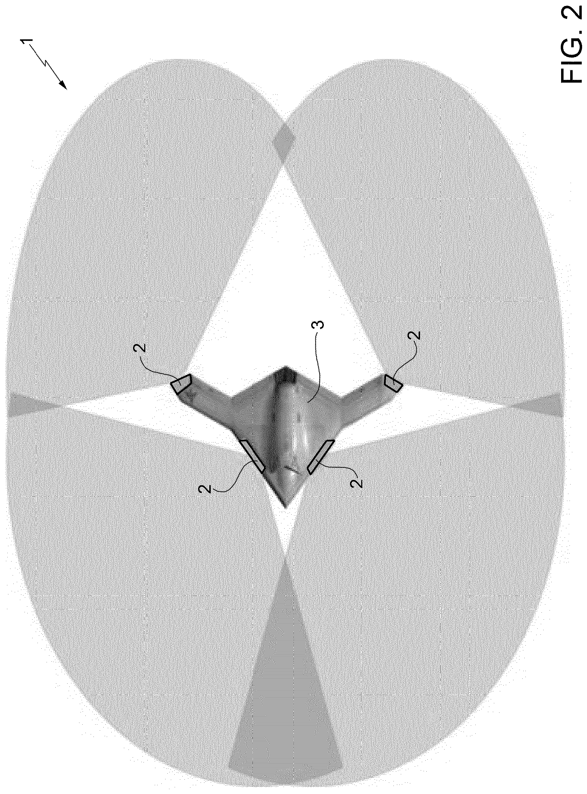

Figure 2 schematically sketches the DAMSS mounted on an aircraft.

The DAMSS **1** is a modular system comprising one or more DAMSS Modules **2** depending on application and need. To achieve 360° Field of Regard (FoR), three or conveniently 4 DAMMS Modules **2** are provided, which are arranged on an aircraft **3** exemplarily shown in Figure 2 in the form of an unmanned combat aerial vehicle (UCAV), and may selectively perform the same or different RF pulsed sensing functions.

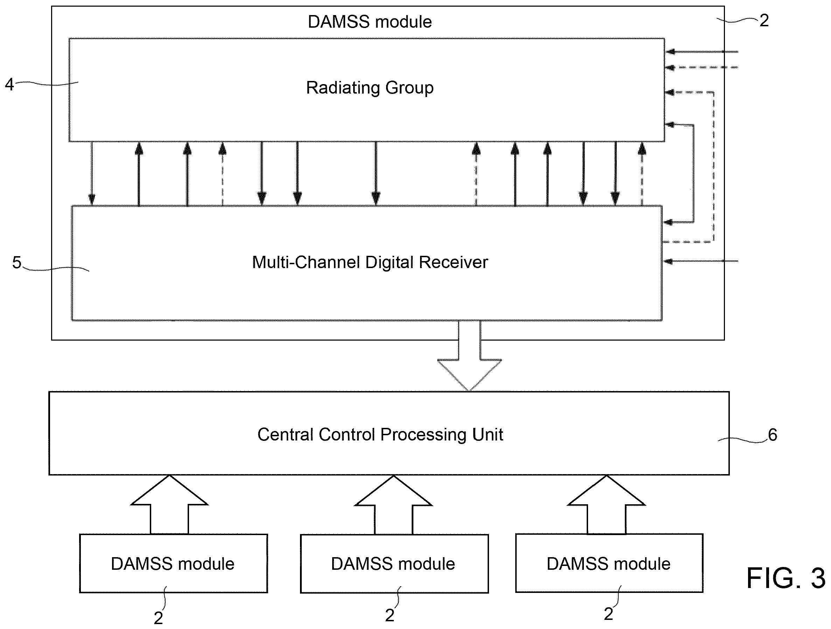

Figure 3 shows a functional block diagram of a DAMSS Module **2**.

A DAMMS Module **2** is essentially a Line-Replaceable Unit (LRU) which comprises the following basic Shop-Replaceable Units (SRUs):

- a Radiating Group (RG) **4,** and
- a Multi-Channel Digital Receiver (MCDR) **5,**

which may be manufactured as physically distinct components and connected by means of a set of RF cables and wirings, or which may be integrated in a single component and functionally connected by means of electrical connectors.

DAMSS Modules **2** are connected, via a bidirectional digital bus, to an external electronic Central Control Processing Unit **6** that provides commands and settings, route navigation data from an external or embedded navigation unit.

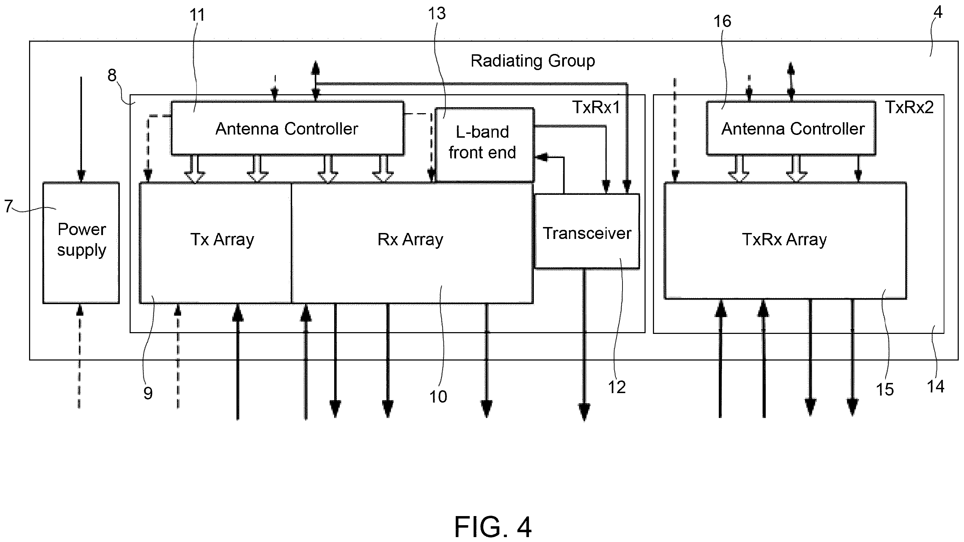

Figure 4 shows a function block diagram of a Radiating Group **4** in a DAMSS Module **2**.

The Radiating Group **4** essentially comprises:

- a power supply unit **7,** and
- a basic Transmit-Receive Module **8,** labelled and hereinafter referred to as "TxRx1", where transmit and receive functions are separated, and, as a consequence, are independently and asynchronously selectively performable, and essentially comprising:

    ✓ an Transmit-only Antenna Module **9,** labelled and referred hereinafter to as "Tx Array", formed of a fully-populated phased array of a small number of transmit-only antenna elements and having a low gain and wide RF transmit beam (floodlight beam) for effective LPI and Electronic beam scan capabilities, namely designed to transmit an RF beam with a wider beamwidth transmit pattern;
    ✓ an Receive-only Antenna Module **10,** labelled and hereinafter referred to as "Rx Array", distinct from the Transmit-only Antenna Module **9** and formed of a fully-populated phased array of a high number of antenna elements and having electronically-scanned, high gain, simultaneous narrow multi receive beams to cover the wide transmit beam, namely designed to receive multiple simultaneous RF beams processable to generate receive beams with narrower beamwidth receive patterns; and

    an Antenna Controller **11** designed to control the Transmit-only and Receive-only Antenna Modules **9** and **10**.

Optionally, the Transmit-Receive Module **8** may further comprise:

- an L/S-band kit devoted to low frequency (L, S bands) applications (Interrogator Friend or Foe (IFF), Communications, Data-Link, etc.) and comprising:

    ✓ an RF-to-digital transceiver **12** for direct up/down conversion from L/S-band to digital, and
    ✓ an L/S-band front end **13** comprising transmitting/receiving dipoles and RF circuitry.

Optionally, the Radiating Group **4** may further comprise a Transmit-Receive Module **14,** labelled and hereinafter referred to as "TxRx2", where transmit and receive functions are not separated, and which is operatively independent from the Transmit-Receive Module **8,** and essentially comprises:

- a Transmit and Receive Antenna Module **15,** labelled and referred also to as "TxRx Array", distinct from the Tx and Rx Arrays **9, 10** and formed of a fully-populated phased array of a small number of antenna elements, approximately in the same number as in the Tx Array **9,** and provided with Sum and Auxiliary channels (Guard, Delta Azimuth and Delta Elevation signals), for electronically-scanned simultaneous radar modes, MIMO applications, Electronic Attack capabilities, as well as communications and Data-Link; and
- an Antenna Controller **16** designed to control the TxRx Array **15**.

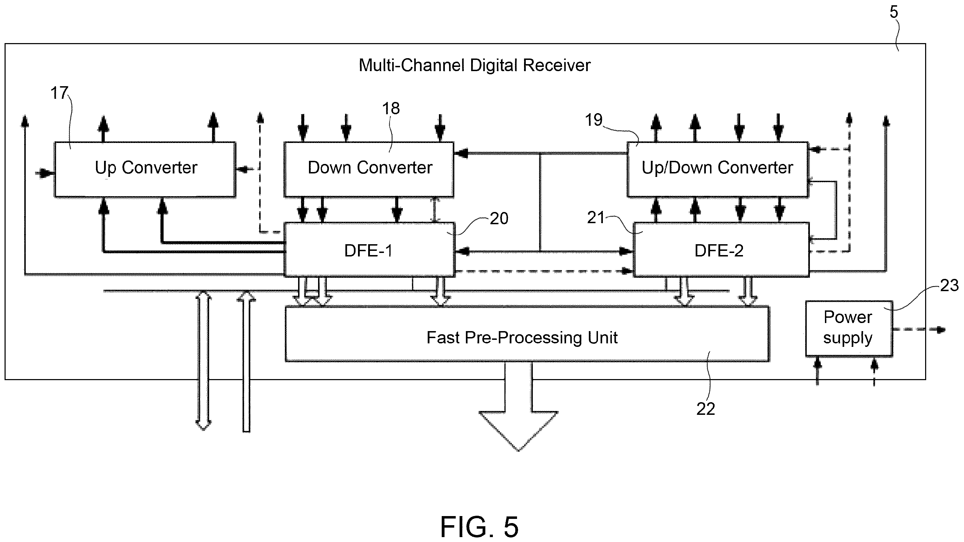

Figure 5 shows a functional block diagram of a Multi-Channel Digital Receiver (MCDR) **5** in a DAMSS Module **2**.

The MCDR **5** essentially comprises the following components:

- an Up-Converter **17** for the Tx Array **9,**
- a Multi-Channel Down-Converter **18** for the Rx Array **10,**
- an Up/Down Converter **19** for the TxRx Array **15,**

- a first Digital Front End **20,** labelled and hereinafter referred to as "DFE1", dedicated to the Tx and Rx Arrays **9, 10,**
- a second Digital Front End **21,** labelled and hereinafter referred to as "DFE2", dedicated to the TxRx Array **15,**
- a Fast Pre-Processing Unit **22** common to DFE1 **20** and DFE2 **21,** and
- a Power Supply **23.**

The MCDR **5** ensures the simultaneous reception of up to 16 RF channels, enabling wideband down conversion and digitization (with up to 2.8 GHz of instantaneous bandwidth between 5.0 and 11 GHz).

Constructively, a Radiating Group **4** comprises a number of wideband fully-populated antenna arrays manufactured according to a Printed Circuit Board (PCB) Active Array (PAA) technology.

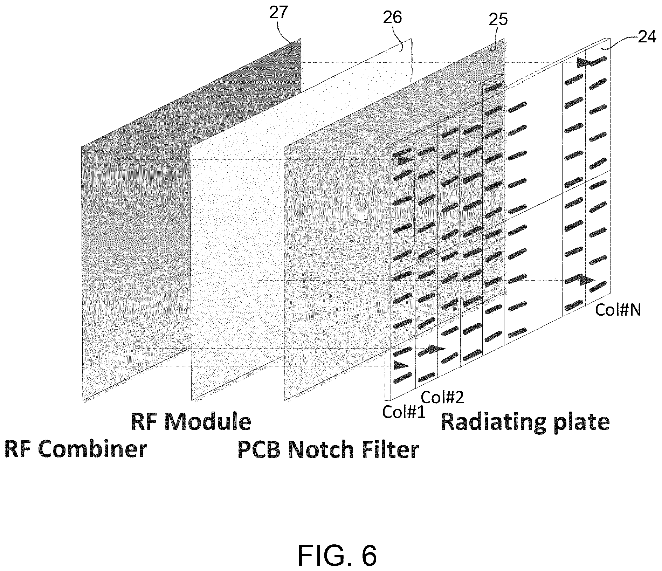

As schematically sketched in Figure 6, the PAA technology allows the overall depth of the Tx Array **9** and the TxRx Array **15** in the Radiating Group **4** to be minimized (basic for impact-less airborne installation over platforms) by superposing the following layers in the indicated order:

- a Radiating Plate PCB **24** containing the individual antenna elements,
- an optional Notch Filter PCB **25** to increase EM isolation between transmit and receive parts, for asynchronous simultaneous RF modes. In particular, the Notch Filter PCB **25** is provided when the TxRx Array **15** is provided in the DAMSS Module **2** and arranged relatively close to the Rx Array **9** to significantly interfere, while the Notch Filter PCB **25** is omitted when the TxRx Array **15** is omitted in the DAMSS Module **2** or when the TxRx Array **15** is provided in the DAMSS Module **2** and is arranged relatively far from the Rx Array 9 to weakly or negligibly interfere;
- an RF Module PCB **26** containing Tx/Rx modules and implementing the front end amplification and beam steering tasks (fully populated arrays, scanning a cone +/-60° around the boresight direction), and
- an RF Combiner PCB **27** containing the RF beamforming network and generating the output channels for the MCDR **5.**

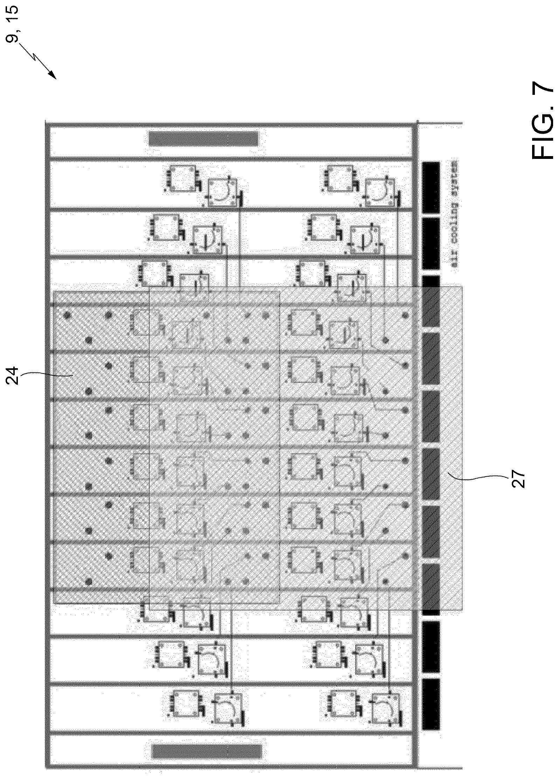

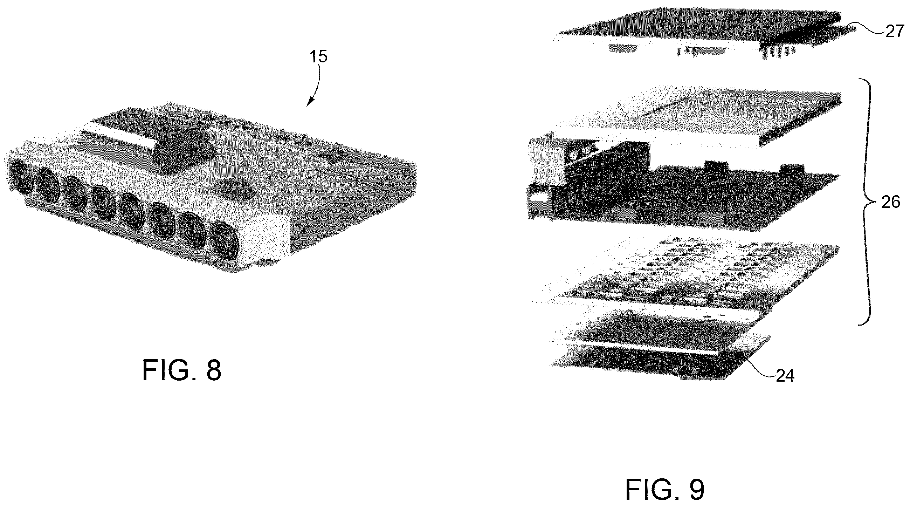

Figure 7 schematically sketches the superposition of the (multilayer) Radiating plate PCB **24** and the (multilayer) RF Combiner PCB **27** in the Tx Array **9** and the TxRx Array **15** according to the PAA technology, while 3D rendered images of the TxRx Array **15**, both in an assembled configuration and in an exploded configuration, are shown in Figures 8 and 9, respectively, with an integrated Inertial Measurement Unit (IMU)

Importantly, the PAA technology removes the heavy constraint implied in the AESA technology and according to which the maximum interspacing of the antenna radiating elements and the electronics of the TRMs is dependent on the operating wavelength. In DAMSS PAA technology, there is a single and little Tx or TxRx array where the electronics of the TRMs must not necessarily be placed with demanding half wavelength interspacing constraint as the antenna radiating elements, so making the antenna design very simple and low cost.

When DAMSS PAA technology is considered for the Rx Array **10**, electronics behind antenna elements must be placed with half wavelength interspacing because of the large size the Rx Array **10** may have. In this case the constraint of half wavelength interspacing is much easier to be achieved because electronics must implement low power, small size packaged Receive-only Modules (RMs).

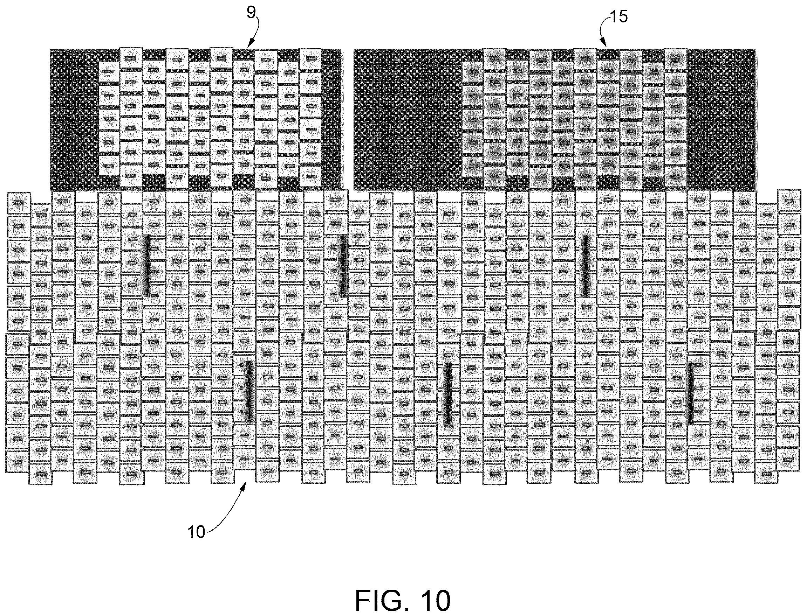

Figure 10 comparatively sketches the Tx Array **9,** the Rx Array **10** and the TxRx Array **15** in order to give a rough idea of a possible spatial arrangement and area occupation thereof, and wherein the individual antenna elements have the same size, but may also have different sizes.

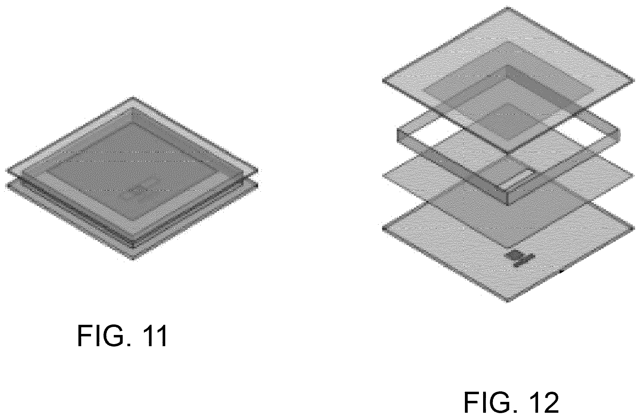

Figures 11 and 12 sketch a single stacked patch radiating/receiving antenna element in the Tx Array **9**, the Rx Array **10** and the TxRx Array **15,** both in an assembled configuration and in an exploded configuration, respectively.

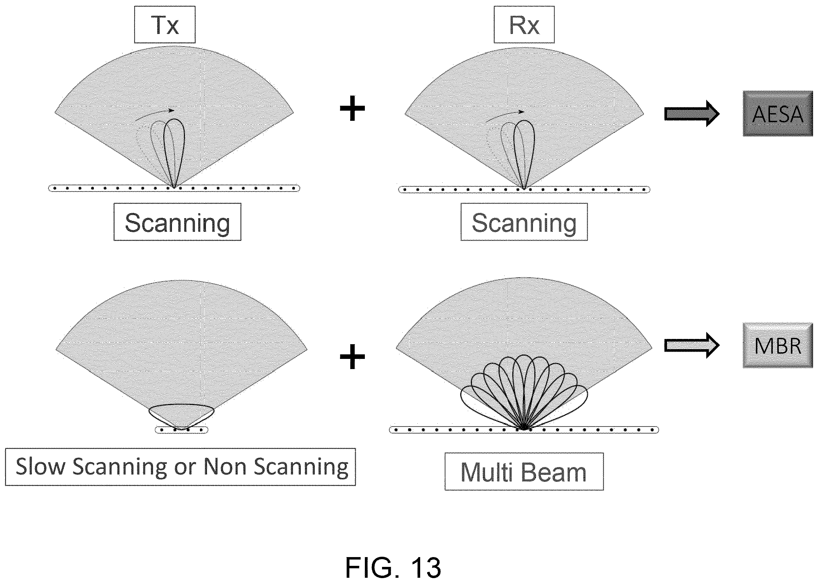

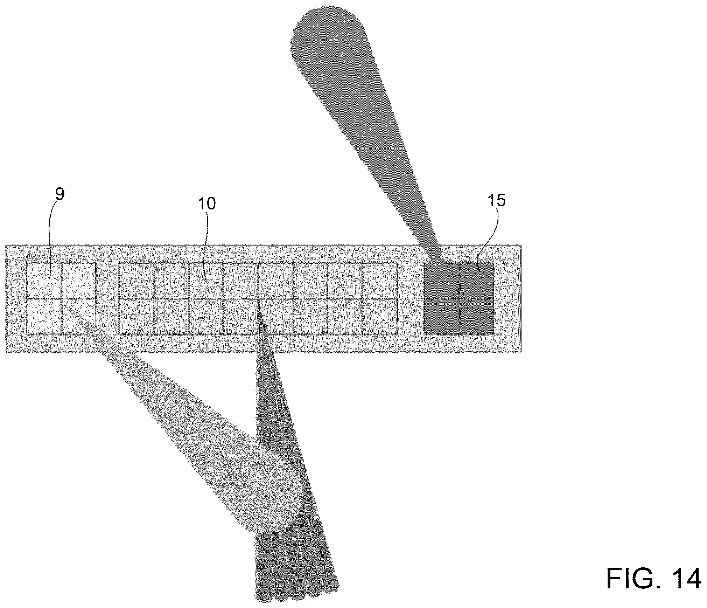

Figure 13 comparatively shows graphical representations of operation principles of the TxRx1 **8** and TxRx2 **14** and of a traditional AESA system, while Figure 14 schematically shows a graphical representation of a Multi Beam on Receive (MBR) operation shown in Figure 13.

In particular, the TxRx1 **8** forms a unique bistatic radar, where a floodlight beam is transmitted by the Tx Array **9** and a set of multiple simultaneous full gain narrow beams is synthesized by the Rx Array **10** (MBR operation). This mechanization requires a full synchronization between the Tx Array **9** and the Rx Array **10.**

At the same time, the TxRx2 **14** forms a monostatic independent radar system, which can be operated autonomously and simultaneously to the previous one.

Moreover, it is also possible an operative mode (of MIMO type) where both Tx Array **9** and the TxRx Array **15** transmit, and both Rx Array **10** and TxRx array **15** receive in a synchronous way.

Since these two distinct radar systems share the same location, a sufficient isolation is to be guaranteed between transmitting and receiving antenna elements in order to avoid limiters blanking and Low Noise Amplifier (LNA) saturation in the various receiving modules. For this reason, asynchronous transmission is allowed only within allowed bands, corresponding to the rejection bands of the PCB notch filters.

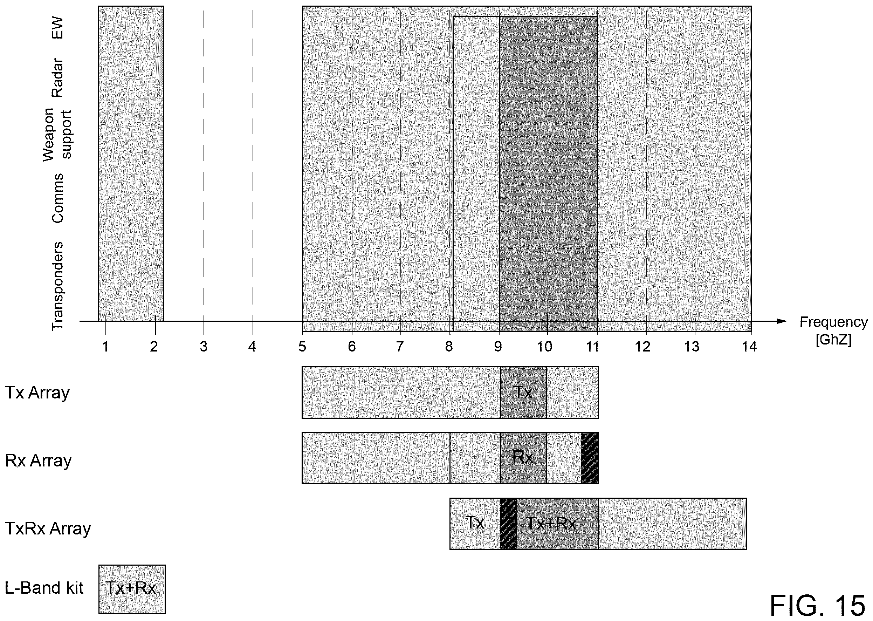

Figure 15 shows a graphical representation of the operating frequency bands of the DAMSS Module **2,** as well as the rejected frequency bands (black bands) for simultaneous radar modes. The rejected frequency bands are absent when the Notch Filter PCB **25** is omitted, so resulting in the performance and flexibility of use of the DAMSS Module **2** being increased.

In order to improve MBR performance, sub-arraying technique is applied, according to which the Rx Array **10** is subdivided into a multiplicity M of partially overlapped sub-arrays not necessarily of the same size, so resulting in a corresponding multiplicity of N simultaneous full gain narrow beams being simultaneously synthesized by acting of the phase shifts applied to the digitized output signals from the M Rx Sub-Arrays.

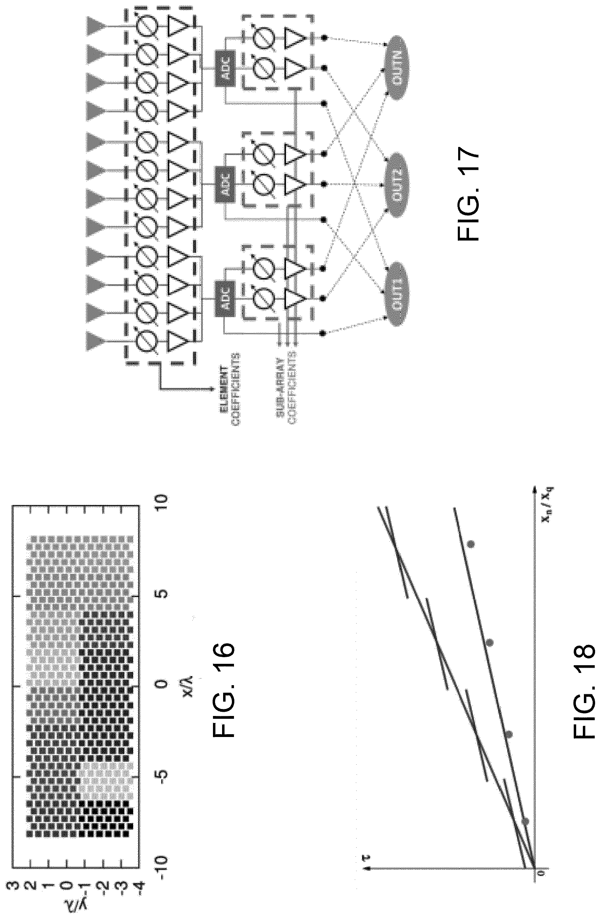

Figure 16 sketches the sub-arraying technique, while Figure 17 sketches a block diagram of a circuit coupled to the individual antenna elements in the Rx Sub-Arrays and designed to apply associated phase shifts to the digitized output signals from the M Rx Sub-Arrays.

Sub-Arraying is known to require application of discontinuous phase shifts to the digitized output signals from the Rx Sub-Arrays, and this phase shift discontinuity is known to produce undesired lateral lobes with remarkable peak amplitudes in the far field radiation pattern of the multiple narrow beams.

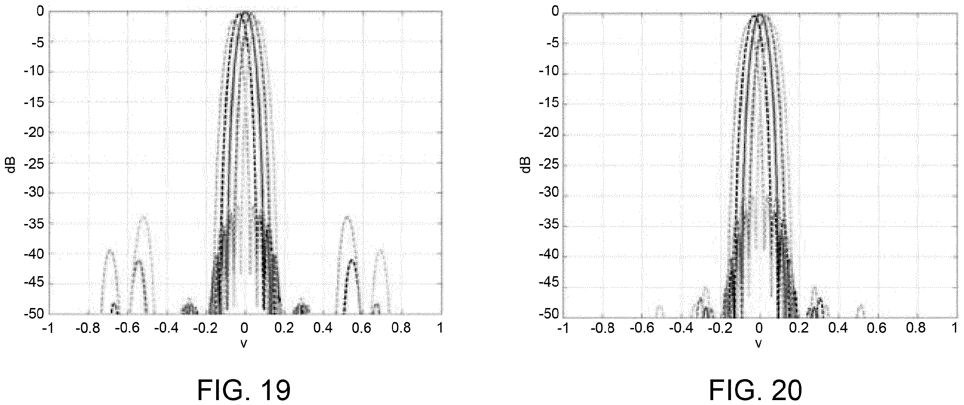

Figure 18 shows a diagram plotting the phase shift discontinuity over the Rx Sub-Arrays, while Figure 19 shows the effect to the phase shift discontinuity in the far field radiation pattern of one of the multiple narrow beams.

In order to reduce peak amplitudes of the undesired lateral lobes, conveniently the Rx Sub-Arrays may be different (non-uniform) in size, namely may be formed of different numbers of antenna elements, and/or may partially overlap, namely the antenna elements in an Rx Sub-Array are shared with antenna elements in others Sub-Arrays.

Figure 20 shows the effects of the provision of differently-sized and partially overlapping Sub-Arrays in the far field radiation patterns for five of the possible multiple narrow beams. It may be appreciated that the provision of differently sized Sub-Arrays together with the provision of partially overlapping Sub-Arrays results in a remarkable reduction of the side lobes peak amplitudes.

The different distinct distinguishing features of the DAMSS allow the following distinct technical advantages to be achieved.

- <u>Separation between Tx and Rx functions</u>

✔ reduce the system detectability in hostile scenario operations (low directivity on Tx and capability for passive only radar modes) (LPI characteristic);
✔ limit the antenna complexity mainly to the design of a passive Rx array, thus dramatically reducing the weight, cost and cooling requirements of the whole system;
✔ enable real simultaneity among different RF services (radar, EW, Communications and Data Link) due to the simultaneous presence of two Tx and Rx antennas;
✔ exploit a floodlight Tx pattern and a cluster of simultaneous Rx beams (MBR) which permits to extend the Time on Target integration;
✔ enable advanced ADBF techniques, such as MIMO and disturbance cancellation algorithms.

- <u>PAA</u>

The PCB Active Array technology allows:

✔ Equivalent AESA technology in a flat tile antenna configuration (very low thickness and no planks used);
✔ COTS - Commercial Of The Shelf packaged Discrete Transmit/Receive Modules enabling an ITAR free, cheaper implementation of the RF Module PCB board, with relaxed cost and cooling requirements;
✔ Easy use of state of the art high performance modules (e.g.: High Power GaN based amplifiers) for maximum performance and power supply efficiency and
✔ TRMs and electronics interspacing to be unconstrained from the operating wavelength, so freeing the antenna design from the operating frequency of the DAMSS.

- <u>Wide Band / Multi RF Sensor System</u>

In the same ensemble, each DAMSS Module hosts antennas and receivers suited for supporting a very large operative bandwidth (from 0.1 up to 11 GHz), thus supporting a multitude of RF services, as required by the modern surveillance and combat airborne missions (Radar modes, EW, Communications, IFF and Data Link).

The concentration of different RF sensors and their simultaneous operation put very demanding requirements on the mutual coupling among adjacent antenna elements, which have been addressed in the DAMSS design and have led to the following innovative solutions:

✔ Ad hoc design of the radiating group item (real elements, lattice and HW selection), in order to maximize the radiating elements isolation;
✔ Introduction of the PCB Notch Layer in the PAA design.

- <u>360° coverage with no moving parts</u>

The use of multiple Radiating Groups on the platform skin surface, enable 360° Field of Regard (FOR) with different functions or mission to be implemented on each panel.

**Claims**

1. An Airborne/Spaceborne Distributed Aperture Multi Sensing RF Pulsed System (1) comprising one or more Radiating Groups (**4**), and a Central Control Processing Unit (**6**) configured to cause the Radiating Groups (**4**) to independently and selectively perform the same or different pulsed RF functions among Radar, Communication, Electronic Warfare, Data-Link, Interrogator Friend or Foe;
each Radiating Group (**4**) comprises a basic Transmit-Receive Module (**8**), where transmit and receive functions are separated, and comprising:

   - a Transmit-only Antenna Module (**9**) comprising a phased array of transmit-only antenna elements,
   - a Receive-only Antenna Module (**10**) comprising a phased array of receive-only antenna elements, and
   - an Antenna Controller (**11**) configured to cause the transmit-only antenna elements in the Transmit-only Antenna Module (**9**) to transmit an RF beam having a transmit pattern with a transmit beamwidth, and the receive-only antenna elements in the Receive-only Antenna Module (**10**) to receive multiple simultaneous RF beams processable to generate receive beams having receive patterns with receive beamwidths individually narrower than transmit beamwidth;

   the Antenna Controller (**11**) is further configured to cause the Transmit-only Antenna Module (**9**) and the Receive-only Antenna Module (**10**) to independently and selectively perform the same or different ones of the pulsed RF functions;
   the number of transmit-only antenna elements in the Transmit-only Antenna Module (**9**) is lower than the number of receive-only antenna elements in the Receive-only Antenna Module (**10**),
   the Transmit-only Antenna Module (**9**) and the Receive-only Antenna Module (**10**) are designed such that the transmit beam has a lower directivity than the individual receive beams so as to result in the transmit beam having a wider azimuthal and/or elevational beamwidth than the individual receive beams, and
   the Transmit-only Antenna Module (**9**) has an antenna gain lower than the Receive-only Antenna Module (**10**);
   each Radiating Group (**4**) further comprises an additional Transmit-Receive Module (**14**), operatively independent from the basic Transmit-Receive Module (**8**), and where transmit and receive functions are not separated;
   the additional Transmit-Receive Module (**14**) comprises:

   - a Transmit and Receive Antenna Module (**15**) comprising a phased array of transmitting and receiving antenna elements, wherein the number of antenna elements in the additional Transmit-Receive Module (**14**) is lower than the number of antenna elements in the Receive-only Antenna Module (**10**); and
   - an Antenna Controller (**16**);

   the Antenna Controllers (**11**, **16**) of the basic Transmit-Receive Module (**8**) and of the additional Transmit-Receive Module (**14**) are designed to cause the basic Transmit-Receive Module (**8**) and the additional Transmit-Receive Module (**14**) to independently and selectively perform the same or different ones of the pulsed RF functions.

2. The Airborne/Spaceborne Distributed Aperture Multi RF Pulsed Sensing System of claim 1, wherein the basic Transmit-Receive Module (**8**) further comprises an L/S-band kit devoted to applications in L/S frequency bands and comprising an RF-to-digital transceiver (**12**) for direct up/down conversion from L/S-band to digital, and an L/S-band front end (**13**) comprising transmitting/receiving dipoles and RF circuitry.

3. The Airborne/Spaceborne Distributed Aperture Multi RF Pulsed Sensing System of any one of the preceding claims, wherein the antenna elements in the Radiating Group(s) (**4**) are Printed Circuit Board (PCB) antenna elements.

4. The Airborne/Spaceborne Distributed Aperture Multi RF Pulsed Sensing System of claim 3, wherein the antenna elements are stacked patch antenna elements.

5. The Airborne/Spaceborne Distributed Aperture Multi RF Pulsed Sensing System of claim 3 or 4, wherein each Radiating Group (**4**) is a Printed Circuit Board (PCB) Active Array (PAA) comprising the following superposed Printed Circuit Boards: a Radiating Plate Printed Circuit Board (**24**) containing the antenna elements; a Notch Filter Printed Circuit Board (**25**) provided when the additional Transmit-Receive Module (**15**) and designed to electromagnetically isolate transmit and receive parts for asynchronous simultaneous RF modes; an RF Module Printed Circuit Board (**26**) containing the Transmit-Receive Module(s) and implementing front end amplification and beam steering tasks; and an RF Combiner Printed Circuit Board (**27**) containing RF beamforming network and generating output channels.

6. The Airborne/Spaceborne Distributed Aperture Multi RF Pulsed Sensing System of any one of the preceding claims, wherein the phased array of receive-only antenna elements in the Receive-only Antenna Module (**10**) is subdivided into a multiplicity of sub-arrays of receive-only antenna elements designed to receive multiple simultaneous RF beams processable to simultaneously synthesize a corresponding multiplicity of simultaneous receive beams with narrower beamwidth receive patterns by acting on phase shifts applied to digitized output signals from the sub-arrays.

7. The Airborne/Spaceborne Distributed Aperture Multi RF Pulsed Sensing System of claim 6, wherein the sub-arrays of receive-only antenna elements have different sizes.

8. The Airborne/Spaceborne Distributed Aperture Multi RF Pulsed Sensing System of claim 6, wherein the sub-arrays of receive-only antenna elements partially overlap.

**Patentansprüche**

1. Luft-/Raumgestütztes Multi-HF-Impuls-Sensorsystem (1) mit verteilter Apertur, umfassend eine oder mehrere Strahlungsgruppen (4) und eine zentrale Steuerverarbeitungseinheit (6), die so konfiguriert ist, dass sie die Strahlungsgruppen (4) dazu veranlasst, unabhängig und selektiv die gleichen oder verschiedene gepulste HF-Funktionen bei Radar, Kommunikation, elektronischer Kriegsführung, Datenverbindung, Freund- oder Feind-Abfrage durchzuführen;
wobei jede Strahlungsgruppe (4) ein Basis-Sende-/Empfangsmodul (8) umfasst, bei dem Sende- und Empfangsfunktionen getrennt sind, und das Folgendes umfasst:

- ein Nur-Sende-Antennenmodul (9), das ein phasengesteuertes Array von Nur-Sende-Antennenelementen umfasst,
- ein Nur-Empfangs-Antennenmodul (10), das ein phasengesteuertes Array von Nur-Empfangs-Antennenelementen umfasst, und
- eine Antennensteuerung (11), die so konfiguriert ist, dass sie die Nur-Sende-Antennenelemente in dem Nur-Sende-Antennenmodul (9) veranlasst, einen HF-Strahl mit einem Sendemuster mit einer Sendestrahlbreite zu senden, und die Nur-Empfangs-Antennenelemente in dem Nur-Empfangs-Antennenmodul (10) veranlasst, mehrere gleichzeitige HF-Strahlen zu empfangen, die so verarbeitet werden können, dass sie Empfangsstrahlen mit Empfangsmustern erzeugen, deren Empfangsstrahlbreite einzeln schmaler ist als die Sendestrahlbreite;

wobei die Antennensteuerung (11) ferner so konfiguriert ist, dass sie bewirkt, dass das Nur-Sende-Antennenmodul (9) und das Nur-Empfangs-Antennenmodul (10) unabhängig und selektiv die gleiche oder verschiedene der gepulsten HF-Funktionen ausführen;
wobei die Anzahl von Nur-Sende-Antennenelementen in dem Nur-Sende-Antennenmodul (9) geringer ist als die Anzahl von Nur-Empfangs-Antennenelementen in dem Nur-Empfangs-Antennenmodul (10), wobei das Nur-Sende-Antennenmodul (9) und das Nur-Empfangs-Antennenmodul (10) so ausgelegt sind, dass der Sendestrahl eine geringere Richtwirkung als die einzelnen Empfangsstrahlen hat, so dass der Sendestrahl eine breitere azimutale und/oder Elevationsstrahlbreite als die einzelnen Empfangsstrahlen hat, und das Nur-Sende-Antennenmodul (9) einen Antennengewinn hat, der geringer ist als der des Nur-Empfangs-Antennenmoduls (10);
wobei jede Strahlungsgruppe (4) ferner ein zusätzliches Sende-/Empfangsmodul (14) umfasst, das betriebsmäßig unabhängig von dem Basis-Sende-/Empfangsmodul (8) ist, und wobei Sende- und Empfangsfunktionen nicht getrennt sind;
wobei das zusätzliche Sende-Empfangs-Modul (14) Folgendes umfasst:

- ein Sende- und Empfangsantennenmodul (15), umfassend ein phasengesteuertes Array von Sende- und Empfangsantennenelementen, wobei die Anzahl von Antennenelementen in dem zusätzlichen Sende-Empfangsmodul (14) geringer ist als die Anzahl von Antennenelementen in dem Nur-Empfangs-Antennenmodul (10); und

- eine Antennensteuerung (16);

wobei die Antennensteuerungen (11, 16) des Basis-Sende-/Empfangsmoduls (8) und des zusätzlichen Sende-/Empfangsmoduls (14) so ausgelegt sind, dass sie das Basis-Sende-/Empfangsmodul (8) und das zusätzliche Sende-/Empfangsmodul (14) veranlassen, unabhängig und selektiv die gleichen oder verschiedene der gepulsten HF-Funktionen auszuführen.

2. Luft-/Raumgestütztes Multi-HF-Impuls-Sensorsystem mit verteilter Apertur nach Anspruch 1, wobei das Basis-Sende-Empfangsmodul (8) ferner ein L/S-Band-Kit umfasst, das für Anwendungen in L/S-Frequenzbändern bestimmt ist und einen HF-Digital-Sender/Empfänger (12) zur direkten Aufwärts/Abwärts-Umwandlung vom L/S-Band in ein digitales Band und ein L/S-Band-Frontend (13) mit Sende/Empfangs-Dipolen und HF-Schaltkreisen umfasst.

3. Luft-/Raumgestütztes Multi-HF-Impuls-Sensorsystem mit verteilter Apertur nach einem der vorhergehenden Ansprüche, wobei die Antennenelemente in der/den Strahlungsgruppe(n) (4) Leiterplatten(*printed circuit board*, PCB)-Antennenelemente sind.

4. Luft-/Raumgestütztes Multi-HF-Impuls-Sensorsystem mit verteilter Apertur nach Anspruch 3, wobei die Antennenelemente gestapelte Patch-Antennenelemente sind.

5. Luft-/Raumgestütztes Multi-HF-Impuls-Sensorsystem mit verteilter Apertur nach Anspruch 3 oder 4, wobei jede Strahlungsgruppe (4) ein aktives Array (PAA) aus gedruckten Schaltungen (PCB) ist, das die folgenden übereinander angeordneten Leiterplatten umfasst:

eine Strahlungsplatten-Leiterplatte (24), die die Antennenelemente enthält;
eine Kerbfilter-Leiterplatte (25), die beim zusätzlichen Sende-Empfangs-Modul (15) vorgesehen ist und dazu dient, um Sende- und Empfangsteile für asynchrone gleichzeitige HF-Modi elektromagnetisch zu isolieren;
eine HF-Modul-Leiterplatte (26), die das/die Sende-Empfangsmodul(e) enthält und Aufgaben der Frontend-Verstärkung und Strahlsteuerung implementiert; und
eine HF-Kombinierer-Leiterplatte (27), die ein HF-Strahlformungs-Netzwerk enthält und Ausgangskanäle erzeugt.

6. Luft-/Raumgestütztes Multi-HF-Impuls-Sensorsystem mit verteilter Apertur nach einem der vorhergehenden Ansprüche, wobei das phasengesteuerte Array von Nur-Empfangs-Antennenelementen in dem Nur-Empfangs-Antennenmodul (10) in eine Vielzahl von Unter-Arrays von Nur-Empfangs-Antennenelementen unterteilt ist, die dafür ausgelegt sind, mehrere gleichzeitige HF-Strahlen zu empfangen, die verarbeitet werden können, um gleichzeitig eine entsprechende Vielzahl von gleichzeitigen Empfangsstrahlen mit schmaleren Strahlbreiten-Empfangsmustern zu synthetisieren, und zwar durch Einwirken auf Phasenverschiebungen, die auf digitalisierte Ausgangssignale von den Unter-Arrays angewendet werden.

7. Luft-/Raumgestütztes Multi-HF-Impuls-Sensorsystem mit verteilter Apertur nach Anspruch 6, wobei die Unter-Arrays von Nur-Empfangsantennenelementen unterschiedliche Größen haben.

8. Luft-/Raumgestütztes Multi-HF-Impuls-Sensorsystem mit verteilter Apertur nach Anspruch 6, wobei sich die Unter-Arrays von Nur-Empfangsantennenelementen teilweise überlappen.

**Revendications**

1. Système pulsé RF à multi-détection à ouverture distribuée aéroporté/spatial (1) comprenant un ou plusieurs groupes rayonnants (4), et une unité de traitement de commande centrale (6) configurée pour amener les groupes rayonnants (4) à effectuer indépendamment et sélectivement les fonctions RF pulsées identiques ou différentes parmi le radar, la communication, la guerre électronique, la liaison de données, l'interrogation ami ou ennemi ;

chaque groupe rayonnant (4) comprend un module d'émission-réception de base (8), dans lequel les fonctions d'émission et de réception sont séparées, et comprenant :

- un module d'antenne d'émission uniquement (9) comprenant un réseau à commande de phase d'éléments d'antenne d'émission uniquement,

- un module d'antenne de réception uniquement (10) comprenant un réseau à commande de phase d'éléments d'antenne de réception uniquement, et

- un dispositif de commande d'antenne (11) configuré pour amener les éléments d'antenne d'émission uniquement dans le module d'antenne d'émission uniquement (9) à transmettre un faisceau RF ayant un motif d'émission avec une largeur de faisceau d'émission, et les éléments d'antenne de réception uniquement dans le module d'antenne de réception uniquement (10) à recevoir des multiples faisceaux RF simultanés pouvant être traités pour générer des faisceaux de réception ayant des motifs de réception avec des largeurs de faisceaux de réception individuellement plus étroites que la largeur de faisceau d'émission ;

le dispositif de commande d'antenne (11) est en outre configuré pour amener le module d'antenne d'émission uniquement (9) et le module d'antenne de réception uniquement (10) à effectuer indépendamment et sélectivement celles identiques ou différentes des fonctions RF puisées ;

le nombre d'éléments d'antenne d'émission uniquement dans le module d'antenne d'émission uniquement (9) est inférieur au nombre d'éléments d'antenne de réception uniquement dans le module d'antenne de réception uniquement (10),

le module d'antenne d'émission uniquement (9) et le module d'antenne de réception uniquement (10) sont conçus de sorte que le faisceau d'émission ait une directivité inférieure à celle des faisceaux de réception individuels de manière à obtenir un faisceau d'émission ayant une largeur de faisceau en élévation et/en azimut plus large par rapport aux faisceaux de réception individuels, et

le module d'antenne d'émission uniquement (9) a un gain d'antenne inférieur à celui du module d'antenne de réception uniquement (10) ;

chaque groupe rayonnant (4) comprend en outre un module d'émission-réception supplémentaire (14), fonctionnellement indépendant du module d'émission-réception de base (8), et dans lequel les fonctions d'émission et de réception ne sont pas séparées ;

le module d'émission-réception supplémentaire (14) comprend :

- un module d'antenne d'émission et de réception (15) comprenant un réseau à commande de phase d'éléments d'antenne d'émission et de réception, dans lequel le nombre d'éléments d'antenne dans le module d'émission-réception supplémentaire (14) est inférieur au nombre d'éléments d'antenne dans le module d'antenne de réception uniquement (10) ; et

- un dispositif de commande d'antenne (16) ;

les dispositifs de commande d'antenne (11, 16) du module d'émission-réception de base (8) et du module d'émission-réception supplémentaire (14) sont conçus pour amener le module d'émission-réception de base (8) et le module d'émission-réception supplémentaire (14) à effectuer indépendamment et sélectivement celles identiques ou différentes des fonctions RF pulsées.

2. Système pulsé RF à multi-détection à ouverture répartie aéroporté/spatial selon la revendication 1, dans lequel le module d'émission-réception de base (8) comprend en outre un kit de bande L/S dédié aux applications dans les bandes de fréquences L/S et comprenant un émetteur-récepteur RF-numérique (12) pour effectuer une conversion ascendante/descendante de la bande L/S en numérique, et une extrémité avant (13) de la bande L/S comprenant des dipôles d'émission/réception et des circuits RF.

3. Système pulsé RF à multi-détection à ouverture répartie aéroporté/spatial selon l'une quelconque des revendications précédentes, dans lequel les éléments d'antenne dans les un ou plusieurs groupes rayonnants (4) sont des éléments d'antenne de cartes de circuits imprimés (PCB).

4. Système pulsé RF à multi-détection à ouverture répartie aéroporté/spatial selon la revendication 3, dans lequel les éléments d'antenne sont des éléments d'antenne à plaques empilées.

5. Système pulsé RF à multi-détection à ouverture répartie aéroporté/spatial selon la revendication 3 ou 4, dans lequel chaque groupe rayonnant (4) est une matrice active de carte de circuit imprimé (PCB) (PAA) comprenant les cartes de circuits imprimés superposées suivantes : une carte de circuit imprimé de plaque rayonnante (24) contenant les éléments d'antenne ; une carte de circuit imprimé de filtre coupe-bande (25) fournie lorsque le module d'émission-réception supplémentaire (15) et conçue pour isoler électromagnétiquement des parties d'émission et de réception pour des modes RF simultanés asynchrones ; une carte de circuit imprimé de module RF (26) contenant les un ou plusieurs modules d'émission-réception et mettant en œuvre des tâches d'amplification d'extrémité avant et d'orientation de faisceaux ; et une carte de circuit imprimé de combineur RF (27) contenant un réseau de formation de faisceaux RF et générant des canaux de sortie.

6. Système pulsé RF à multi-détection à ouverture répartie aéroporté/spatial selon l'une quelconque des revendications précédentes, dans lequel le réseau à commande de phase d'éléments d'antenne de réception uniquement dans le module d'antenne de réception uniquement (10) est subdivisé en une multiplicité de sous-réseaux d'éléments d'antenne de réception uniquement conçus pour recevoir multiples faisceaux RF simultanés pouvant être traités pour synthétiser simultanément une multiplicité correspondante de faisceaux de réception simultanés avec des motifs de réception à largeurs de faisceau plus étroites en agissant sur des déphasages appliqués aux signaux de sortie numérisés des sous-réseaux.

7. Système pulsé RF à multi-détection à ouverture répartie aéroporté/spatial selon la revendication 6, dans lequel les sous-réseaux d'éléments d'antenne de réception uniquement ont des tailles différentes.

8. Système pulsé RF à multi-détection à ouverture répartie aéroporté/spatial selon la revendication 6, dans lequel les sous-réseaux d'éléments d'antenne de réception uniquement se chevauchent partiellement.

TMRs

Plancks

Plank

RF Combiners

8X8 Beam steering Control

8X8 RF Test Control

Beam steering management & Interfaces

Local PSU

FIG. 1

FIG. 2

DAMSS module

Radiating Group

Multi-Channel Digital Receiver

Central Control Processing Unit

DAMSS module

DAMSS module

DAMSS module

FIG. 3

FIG. 4

FIG. 5

**FIG. 6**

air cooling system

FIG. 7

FIG. 8

FIG. 9

EP 3 319 172 B1

FIG. 10

FIG. 11

FIG. 12

FIG. 13

FIG. 14

FIG. 15

FIG. 16

FIG. 17

FIG. 18

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2857858 A1